# EUROPEAN PATENT SPECIFICATION

(11) **EP 1 181 398 B1**
(45) Date of publication and mention of the grant of the patent: **17.07.2002**
(21) Application number: 00922389.2
(22) Date of filing: 28.04.2000
(51) Int. Cl.: C25B 15/02

(54) **PRESSURE CONTROL SYSTEM IN A WATER ELECTROLYTIC CELL**
DRUCKSTEUERUNGSANLAGE FÜR WASSER-ELEKTROLYSEZELLEN
SYSTEME DE REGULATION DE PRESSION DESTINE A UNE PILE ELECTROLYTIQUE A EAU

(30) Priority: 12.05.1999 CA 2271517
(43) Date of publication of application: 27.02.2002
(73) Proprietor: STUART ENERGY SYSTEMS CORPORATION, Toronto, Ontario M9C 1B9 (CA)
(72) Inventor: FAIRLIE, Matthew, J., Toronto, Ontario M9C 1B9 (CA); STEWART, William, J., Toronto, Ontario M9C 1B9 (CA); DONG, Charlie, Toronto, Ontario M9C 1B9 (CA)
(74) Representative: Denmark, James
(86) International application number: CA0000486
(87) International publication number: WO0070126

(56) References cited:
- WO-A-94/05831

## Description

### FIELD OF THE INVENTION

This invention relates to electrolytic cells, particularly to water electrolytic cells for producing hydrogen and oxygen, more particularly to hydrogen gas pressure control devices; and to use of hydrogen and oxygen produced thereby.

### BACKGROUND TO THE INVENTION

Urban smog causes lung and other respirational difficulties and leads to health conditions which may require a supply of breathing oxygen to be carried by individuals in their home. Often this oxygen is provided by liquid oxygen delivered to the home from time to time. Oxygen produced electrolytically can achieve the same goal.

Vehicles and other devices have operated on hydrogen and with the use of fuel cells now increasing for mobile and stationary use, hydrogen is needed to provide fuel.

Electrosynthesis is a method for production of chemical reaction(s) that is electrically driven by passage of an electric current, typically a direct current (DC), through an electrolyte between an anode electrode and a cathode electrode. An electrochemical cell is used for electrochemical reactions and comprises anode and cathode electrodes immersed in an electrolyte with the current passed between the electrodes from an external power source. The rate of production is proportional to the current flow in the absence of parasitic reactions. For example, in a liquid alkaline water electrolysis cell, the DC current is passed between the two electrodes in an aqueous electrolyte to split water, the reactant, into component product gases, namely, hydrogen and oxygen where the product gases evolve at the surfaces of the respective electrodes.

Water electrolysers have typically relied on pressure control systems to control the pressure between the two halves of an electrolysis cell to insure that the two gases, namely, oxygen and hydrogen produced in the electroytic reaction are kept separate and do not mix.

One such pressure control system provides a water seal to equalize pressure in the two halves of the cell. This is the approach most often followed in "home made" electrolysers. Typically the water seal is a couple of inches deep and so the cell operates at a couple of inches of WC pressure above atmospheric.

An alternative system provides a membrane separator which can sustain a pressure difference between the two halves of the cell without gas mixing. The PEM cell is the best example of this type of system. The PEM (polymer electrolyte membrane) cell can sustain up to a 2500 psi pressure difference without a significant loss of gas purity.

A third is an active control system which senses pressure and controls the outflow of gases from the two cells. Control can be achieved in one of two ways:
by a mechanical system which relies on pressure regulators, such as a dome-loaded flow regulator to control pressure between the two cells which, for example, might employ the oxygen pressure as a reference pressure to regulate the pressure in the hydrogen half of the cell; and
by an electronic system which relies on measurement of the difference in gas pressure between the two cell to control the rates of gas outflow from the two sides of the cell so as to maintain a desired pressure difference of usually zero.

Typically, however, for very small commercial hydrogen generators (0.1 Nm³/h) PEM type electrolysis cells are favoured. Although the cost of the cell is far higher than for conventional alkaline electrolysers, these costs are more than offset by the controls needed for the conventional alkaline systems using mechanical or electronic actuators, and by the need for higher pressures and, hence, compression in electrolysers using a water seal pressure control system.

However, there remains a need for a relatively low cost, and reliable method of controlling pressure in a pressurized electrolyser.

### SUMMARY OF THE INVENTION

It is an object of the present invention to provide efficacious methods and water electrolysers for producing output hydrogen at a minimum desired pressure.

It is an object of the present invention to provide efficacious methods and water electrolysers for producing output hydrogen and oxygen in situ for e.g. localized small establishments such as houses, hospitals and the like.

It is a further object of the present invention to provide an electrolyser apparatus and method which can deliver hydrogen at pressures to at least 100 psi, essentially on demand, while maintaining an essentially zero pressure difference across the cell membrane.

The invention in its broadest aspect relies on creating a liquid levels pressure differential between the catholyte liquid and the anolyte liquid levels by causing oxygen pressure build-up above the anolyte and fall in anolyte liquid level and a commensurate rise in catholyte level, while hydrogen is free to leave the cell until either (a) the anolyte level drops to a pre-selected level to trigger a control valve to prevent hydrogen release from the cell or (b) the catholyte level rises to similarly trigger the control valve to similarly prevent hydrogen release from the cell. Subsequent build-up of hydrogen pressure above the catholyte reverses the respective liquid levels to open the control valves to provide hydrogen at the desired minimum pressure. Hydrogen pressure builds up under the closed release valve situation because two moles of hydrogen are produced for each mole of oxygen in the electrolytic process.

Accordingly in one broad aspect, the invention provides a process for providing hydrogen at a desired minimum pressure from an electrolyser comprising
an anolyte solution having an anolyte liquid level;
a catholyte solution having a catholyte liquid level;
oxygen generated at an oxygen pressure above said anolyte;
hydrogen generated at a hydrogen pressure above said catholyte for passage through hydrogen outlet means;
the process comprising raising the oxygen pressure above the anolyte to effect a liquid levels pressure differential between said catholyte liquid level and said anolyte liquid level to a pre-selected value to effect closure of said hydrogen outlet means and an increase in the hydrogen pressure to a value to effect opening of said hydrogen outlet means to provide hydrogen at said desired minimum pressure.

The subsequent build-up in hydrogen pressure upon the sealing of the hydrogen outlet is merely an incremental one sufficient to cause "leakage" of hydrogen as output product at the desired pressure.

In a further broad aspect, the invention provides an improved electrolyser for providing hydrogen at a desired minimum pressure comprising
an anolyte solution having an anolyte liquid level;
a catholyte solution having a catholyte liquid level;
oxygen generation means for generating oxygen at an oxygen pressure above said anolyte;
hydrogen generation means for generating hydrogen at a hydrogen pressure above said catholyte;
generated hydrogen outlet means; the improvement comprising pressure means for raising the oxygen pressure above the anolyte to effect a liquid level pressure differential between said catholyte liquid level and said anolyte liquid level to a pre-selected value to effect closure of said hydrogen outlet means and a subsequent increase in the hydrogen pressure to a value to effect opening of said hydrogen outlet means to provide hydrogen at said desired minimum pressure through said outlet means.

As used herein the term "cell", "electrochemical cell" or "electrolyser" refers to a structure comprising at least one pair of electrodes including an anode and a cathode with each being suitably supported within an enclosure through which electrolyte is circulated and product is disengaged. The cell includes a separator assembly having appropriate means for sealing and mechanically supporting the separator within the enclosure. Multiple cells may be connected either in series or in parallel to form a cell stack and there is no limit on how may cells may be used to form a stack. In a stack the cells are connected in a similar manner, either in parallel or in series. A cell block is a unit which comprises one or more cell stacks and multiple cell blocks are connected together by an external bus bar. A functional electrolyser comprises one or more cells which are connected together either in parallel, in series, or a combination of both.

Thus, the apparatus and methods according to the invention may be practiced in a single cell or in a stack of cells comprising a plurality of so-called end boxes within which are located oxygen and hydrogen outlet take-off lines.

The present invention provides a relatively low cost and reliable method and apparatus for controlling the pressure in an electrolyser, wherein in one embodiment a floating bobber or flap valve opens or closes the hydrogen out take depending on the level of the electrolyte (catholyte) in the hydrogen side of the cell. A check valve controls the oxygen outflow from the oxygen side (anolyte) of the cell and maintains cell pressure at a selected value set by the check valve. The pressure of the check valve can also be adjusted to set the maximum pressure for safety needed in a particular application. On the hydrogen side, a bobber floating at the level of the catholyte either opens or seals the hydrogen side regulating the flow of hydrogen gas. The pressure differential between the two sides of the cell is determined by the difference in level of electrolyte in the anode and cathode compartments.

In an alternative embodiment according to the invention, hydrogen release under pressure by valve control not by a bobber or like floating means is by anolyte liquid level sensing and associated activated control means.

The electrolyser according to the invention is essentially free of stored hydrogen apart from residual gas above the catholyte, in headers and the like, optionally at or below the desired minimum hydrogen pressure. Alternatively, the cell may be connected to hydrogen storage means, such as, for example, cylinders, tanks and the like under pressure; or, preferably, as a metal hydride such as titanium hydride, made, in situ, under the minimum hydrogen pressure provided by the method and cell according to the invention, wherein the oxygen gas pressure is set by a back pressure valve to essentially match the metal hydride absorption pressure (plateau); while pressure in the hydrogen side of the cell is balanced by, for example, a float or valve regulating flow as hereinabove defined into the metal hydride storage container.

The invention provides in a further aspect wherein said catholyte level detection and control means comprises anolyte liquid sensing means;
valve means to effect closure and opening of said hydrogen outlet; and
activation means in communication with said sensing means and said valve means.

Alternative methods for use in the practice of the invention to utilize the catholyte liquid level to effect hydrogen pressure build-up and release may comprise liquid sensor means such as, for example, optical sensors relying on suitable wavelength radiation for absorption, reflective and refractive index characteristics, located internally or externally of the cell. An electrical contact such as a Reed Switch electrical probe with the catholyte liquid surface may be used to trigger value closure and subsequent opening upon the catholyte level fall due to the hydrogen pressure build-up.

For hydrogen storage in metal hydrides, pressures of several atmospheres are required for the metal to absorb hydrogen, and, hence, a water seal type control system per se does not provide adequate pressure control. Alkaline electrolysis is compatible with hydriding some types of alloys developed for metal hydride batteries, which are not poisoned by potassium hydroxide or water. In contrast, the cost of an electronic or mechanically actuated cell pressure system is prohibitive compared to using alkaline type electrolysis using the invention herein for pressure control means..

Thus, in the case of metal hydride storage, the present invention provides low cost control systems which can deliver hydrogen up to at least 100 psi pressure, depending on the temperature and absorption characteristics of the metal hydride while maintaining a near zero pressure differential across the cell membrane.

Thus, this invention is well suited to charging metal hydrides as the pressure of the cell check valve can be set close to the desired hydriding pressure which is determined by temperature, specific charging rate, i.e. hydrogen absorption rate per unit mass of alloy and alloy kinetics.

The methods and apparatus as hereinbefore defined are also of value in providing an essentially storageless supply of hydrogen, on demand, at a minimum desired pressure to a hydrogen compressor to provide a source of hydrogen at a significantly higher pressure.

In a further aspect, therefore, the invention provides apparatus according to the invention as hereinbefore defined further comprising compressor means for raising the pressure of the outlet hydrogen from said desired minimum pressure to a desired compressor outlet pressure. The compressor means may be continuously operative and comprise a recirculation loop connecting compressor discharge hydrogen to compressor suction hydrogen through a pressure regulator to maintain suction at an elevated pressure. Continuous operation of the compressor includes operation of the compressor only when the electrolyser according to the invention is generating hydrogen to feed the compressor. Such a system is unique in not incorporating a hydrogen storage unit other that conduits whose volume is minimal.

The process and apparatus of the invention is of particular value as a SPFA system herein termed a 'small personal fuel appliance' for providing compressed hydrogen to hydrogen-fueled units, such as for example, automobiles, trucks and other vehicles. The storageless SPFA supplies hydrogen preferably only on demand to the vehicle, most preferably at off-peak electricity supply times.

In a further aspect, the invention provides an oxygen supply at a desired minimum pressure on demand, at a low or negligible pressure differential across the cell membrane.

Accordingly, the invention further provides a process for providing oxygen, in situ, at a desired minimum pressure from an electrolyser comprising a process as hereinbefore defined further comprising collecting said oxygen from said electrolyser at substantially said minimum pressure.

In yet a further aspect the invention provides an electrolyser as hereinbefore defined further comprising means for collecting said oxygen from said electrolyser.

Thus, the methods and apparatus according to the invention provides for the in situ on-site, optionally on demand only, ready supply of hydrogen as a fuel and oxygen for breathing assistance, sanitization and disinfection of water either directly or via a subsequent ozonisation process. Then, both gases may be consumed where they are jointly produced, to eliminate transportation and delivery and with minimal storage as desired, in a residential, commercial and even an industrial setting.

### BRIEF DESCRIPTION OF THE DRAWINGS

In order that the invention may be better understood, preferred embodiments will now be described by way of example only, with reference to the accompanying drawings wherein:
Fig. 1 is a diagrammatic sketch of an electrolyser according to the invention;
Fig. 2 is a diagrammatic sketch of an alternative embodiment of an electrolyser according to the invention;
Figs. 3A and 3B show sketches of alternative anolyte level and control means; and
wherein the same numerals denote like parts.

### DETAILED DESCRIPTION OF PREFERRED EMBODIMENTS

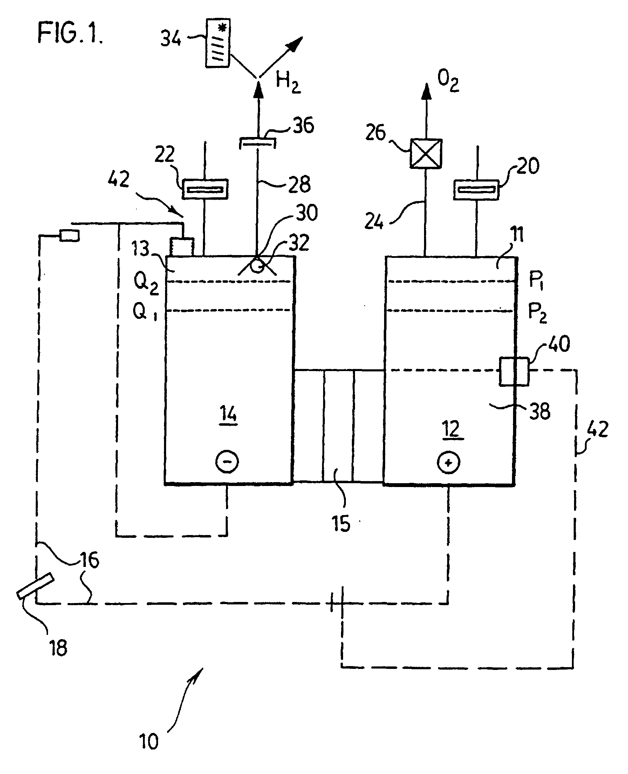

With reference to Fig. 1, this shows generally as 10 an electrolyser having an oxygen gas product chamber 11 above anolyte 12, a hydrogen gas product chamber 13 above catholyte 14, a cell membrane 15, electrical connections 16 to a solar energy power source 18, and oxygen and hydrogen pressure release vents 20 and 22, respectively. Oxygen product line 24 has a regulator check valve 26 set at a desired pre-selected value, while hydrogen product line 28 has an outlet 30 to receive a bobber or float ball 32 on the catholyte surface operably adapted to be in sealing engagement therewith as explained hereinbelow.

Hydrogen outlet product line 28 leads, in the embodiment shown, to a metal hydride chamber 34, through a disconnect fitting 36. Anolyte cell half 38 has a safety low liquid level electrical switch 40 connected through electrical conduit 42 to power source 18.

In operation, since oxygen release is controlled by regulator 26, set at a desired pressure, typically up to 100 psi and preferably about 60 psi, oxygen gas builds up in chamber 11. Hydrogen product escapes chamber 13 through initially open outlet 30 while the oxygen pressure in chamber 11 builds up to cause liquid anolyte level to fall from its initial start-up level P₁ to lower operating level P₂ with a concomittant rise in catholyte level from start-up Q₁ to sealing level Q₂, whereby float 32 seals outlet 30. However, since hydrogen gas is produced twice as fast by volume than oxygen gas in cell 10, hydrogen pressure builds up to a value which forces an incremental lowering of catholyte level to a degree which causes bobber 32 to partially disengage outlet 30 and release hydrogen at the pressure value pre-determined by regulator 26. Accordingly, a steady state supply of hydrogen at the desired minimum pressure is provided to metal hydride production unit 34, or elsewhere as desired.

Oxygen product may be taken-off at pressure through valve 26 or vent 20.

Pressure release safety features are provided by bellows system 42, vents 20, 22 and low level switch 40 which cuts off power to cell 10 if oxygen pressure build up in chamber 11 is excessive.

Thus, notwithstanding the ability of cell 10 according to the invention to provide hydrogen and oxygen at desired minimum pressures, the pressure differential across cell membrane 15 is low.

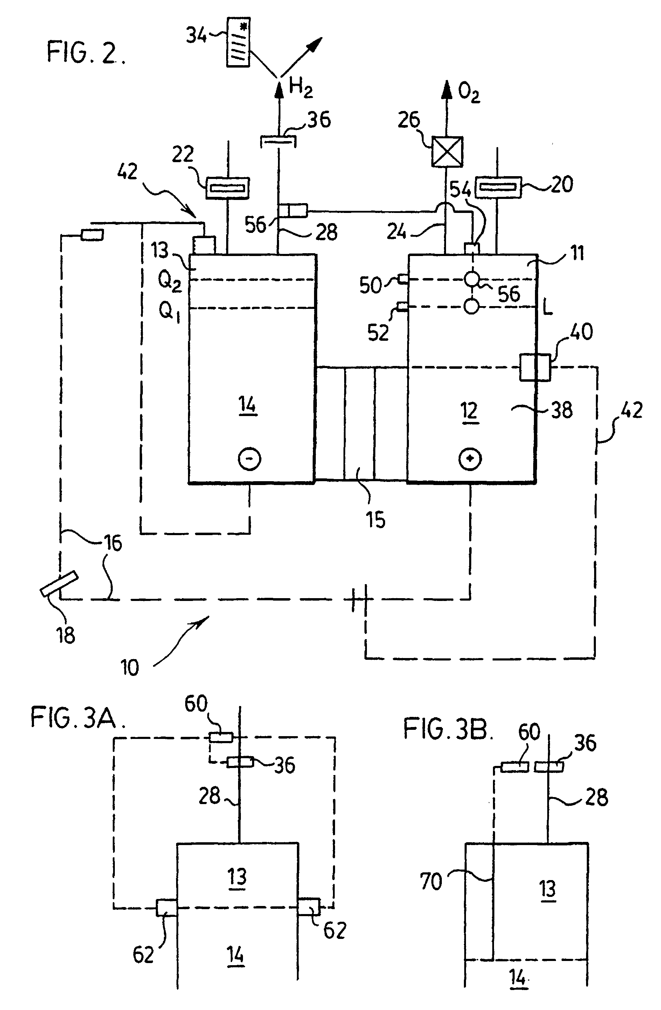

With reference now to the alternative embodiment shown in Fig. 2 this shows, basically cell 10 having hydrogen product line 28 under a valve control not by floating bobber means 32 but by actual anolyte level sensing and associated control means.

In more detail, in this embodiment cell 10 has a pair of anolyte level sensors 50, 52 operably connected through control means 54 which controls a solenoid value 56 so positioned that upper sensor 50 maintains valve 56 open, until oxygen pressure build up in chamber 11 forces the anolyte level to drop to a desired pre-selected level "L" where it activates sensor 52 and control 54 which overrides sensor 50 to close valve 56. Build up of hydrogen pressure causes sensor 52 to be inactived by an incremental rise in anolyte level and defer to sensor 50, which causes valve 56 to open and release product hydrogen at the desired minimum value. A steady state of activation and deactivation may ensure if liquid level pressure differentials fluctuate otherwise hydrogen gas is continuously provided at the requisite minimum pressure set by oxygen regulator 26.

Figs. 3A and 3B show further alternative embodiments by which the anolyte liquid level may be determined by a sensor and control means for effecting closure and subsequent opening of the hydrogen output line.

Fig. 3A illustrates the triggering of a solenoid valve 60 linked to optical sensor 62 so positioned as to determine a change in light absorption when catholyte level rises or incrementally falls under the influence of oxygen pressure and hydrogen pressure increases, respectively. Valve 60 controls hydrogen output from chamber 13.

Fig. 3B illustrates an electrical probe 70 within the cathode half cell 10, which probe 70 is operably contractible with catholyte level to trigger valve 60.

Although this disclosure has been described and illustrated certain preferred embodiments of the invention, it is to be understood that the invention is not restricted to those particular embodiments. Rather, the invention includes all embodiments which are functional or mechanical equivalence of the specific embodiments and features that have been described and illustrated, provided they are within the scope of the appended claims.

## Claims

1. A process for providing hydrogen at a desired minimum pressure from an electrolyser comprising
providing an anolyte solution having an anolyte liquid level;
providing a catholyte solution having a catholyte liquid level;
generating oxygen at an oxygen pressure above said anolyte;
generating hydrogen at a hydrogen pressure above said catholyte;
passing said hydrogen through hydrogen outlet means;
the method comprising raising the oxygen pressure above the anolyte to effect a liquid levels pressure differential between said catholyte level and said anolyte level to a pre-selected value to effect closure of said hydrogen outlet means and a subsequent increase in the hydrogen pressure to a value to effect opening of said hydrogen outlet means to provide hydrogen at said desired minimum pressure.

2. A process as defined in claim I comprising preventing release of oxygen from said cell by oxygen regulator means.

3. A process as defined in claim 2 comprising raising said oxygen pressure to a desired oxygen pressure value.

4. A process as defined in claim 1 comprising feeding said hydrogen at said desired minimum pressure to a metal hydride generating means.

5. A process as defined in claim 1 comprising feeding said hydrogen at said desired minimum pressure to a compressor means to compress said hydrogen to a second desired minimum pressure.

6. A process as defined in any one of claims 1 - 5 further comprising removing oxygen from said electrolyser.

7. An electrolyser for providing hydrogen at a desired minimum pressure comprising
an anolyte solution having an anolyte liquid level;
a catholyte solution having a catholyte liquid level;
oxygen generation means for generating oxygen at an oxygen pressure above said anolyte;
hydrogen generation means for generating hydrogen at a hydrogen pressure above said catholyte;
generated hydrogen outlet means;
the improvement comprising hydrogen outlet closure means; oxygen pressure means for raising the oxygen pressure above the anolyte to effect a positive liquid level pressure differential between said catholyte liquid level and said anolyte liquid level to a pre-selected value to effect closure of said hydrogen outlet means and a subsequent increase in the hydrogen pressure to a value to effect opening of said hydrogen outlet means to provide hydrogen at said desired minimum pressure through said outlet means.

8. An electrolyser as defined in claim 7 wherein said oxygen pressure means comprises a regulator valve means.

9. An electrolyser as defined in claim 7 comprising hydrogen outlet closure means.

10. An electrolyser as defined in claim 7 or claim 8 wherein said hydrogen outlet closure means comprises liquid level detection means and control means to provide said liquid levels pressure differential at said pre-selected value to effect said closure of said hydrogen outlet means and said subsequent increase in the hydrogen pressure to a value to effect opening of said hydrogen outlet means.

11. An electrolyser as defined in claim 10 wherein said hydrogen outlet closure means comprises anolyte level detection means and control means to provide said liquid levels pressure differential at said pre-selected value to effect said closure of said hydrogen outlet means and said subsequent increase in the hydrogen pressure to a value to effect opening of said hydrogen outlet means.

12. An electrolyser as defined in claim 9 wherein said hydrogen outlet closure means comprises catholyte liquid sensing means.

13. An electrolyser as defined is claim 12 wherein said hydrogen outlet closure means comprises catholyte liquid flotation blocking means.

14. An electrolyser as defined in claim 12 wherein said catholyte liquid level sensing means comprises optical sensors disposed within or adjacent outside said catholyte.

15. An electrolyser as defined in claim 12 wherein said catholyte liquid level sensing means comprises electrical contact sensing means.

16. An electrolyser as defined in any one of claims 12 - 15 wherein said hydrogen outlet closure means further comprises value means to effect closure and opening of said hydrogen outlet; and activation means in communication with said sensing means and said value means.

17. An electrolyser as defined in claim 10 wherein said catholyte level detection and control means comprises anolyte liquid sensing means;
valve means to effect closure and opening of said hydrogen outlet; and
activation means in communication with said sensing means and said valve means.

18. An electrolyser as defined in any one of claims 7 - 17 further comprising oxygen outlet means.

## Patentansprüche

1. Verfahren zur Bereitstellung von Wasserstoff bei einem gewünschten Mindestdruck von einem Elektrolyseur, das Folgendes umfasst:
Bereitstellung einer Anolyt-Lösung mit einem Anolyt-Flüssigkeitsspiegel;
Bereitstellung einer Katholyt-Lösung mit einem Katholyt-Flüssigkeitsspiegel;
Erzeugen von Sauerstoff bei einem Sauerstoffdruck über genanntem Anolyt:
Erzeugen von Wasserstoff bei einem Waserstoffdruck über genanntem Katholyt;
Weiterleiten von genanntem Wasserstoff durch ein Wasserstoffaustrittsmittel;
wobei das Verfahren das Anheben des Sauerstoffdruckes über dem Anolyt zur Bewirkung eines Druckdifferenzials des Flüssigkeitsspiegels zwischen genanntem Katholyt-Spiegel und genanntem Anolyt-Spiegel auf einen vorgewählten Wert umfasst, um das Schließen von genanntem Wasserstoffaustrittsmittel und eine sich anschließende Erhöhung des Wasserstoffdruckes auf einen Wert zu bewirken, um das Öffnen von genanntem Wasserstoffaustrittsmittel zur Bereitstellung von Wasserstoff bei genanntem Mindestdruck zu bewirken.

2. Verfahren nach Anspruch 1, das die Verhinderung der Freisetzung von Sauerstoff aus genannter Zelle durch ein Sauerstoffreglermittel umfasst.

3. Verfahren nach Anspruch 2, das das Anheben von genanntem Sauerstoffdruck auf einen gewünschten Sauerstoffdruckwert umfasst.

4. Verfahren nach Anspruch 1, das das Zuleiten von genanntem Wasserstoff bei genanntem gewünschtem Mindestdruck an ein Metallhydrid-Erzeugungsmittel umfasst.

5. Verfahren nach Anspruch 1, das das Zuleiten von genanntem Wasserstoff bei genanntem gewünschtem Mindestdruck an ein Kompressormitttel zum Komprimieren von genanntem Wasserstoff auf einen zweiten gewünschten Mindestdruck umfasst.

6. Verfahren nach einem der Ansprüche 1 - 5, das ferner das Entfernen von Sauerstoff aus genanntem Elektrolyseur umfasst.

7. Elektrolyseur zum Bereitstellen von Wasserstoff bei einem gewünschten Mindestdruck, der Folgendes umfasst:
Eine Anolyt-Lösung mit einem Anolyt-Flüssigkeitsspiegel;
eine Katholyt-Lösung mit einem Katholyt-Flüssigkeitsspiegel;
ein Sauerstofferzeugungsmittel zum Erzeugen von Sauerstoff bei einem Sauerstoffdruck über genanntem Anolyt;
ein Wasserstofferzeugungsmittel zum Erzeugen von Wasserstoff bei einem Wasserstoffdruck über genanntem Katholyt;
Austrittsmittel für erzeugten Wasserstoff;
wobei die Verbesserung Folgendes umfasst: ein Wasserstoffaustrittsschließmittel; ein Sauerstoffdruckmittel zum Anheben des Sauerstoffdruckes über dem Anolyt zur Bewirkung eines positiven Druckdifferenzials des Flüssigkeitsspiegels zwischen genanntem Katholyt-Flüssigkeitsspiegel und genanntem Anolyt-Flüssigkeitsspiegel auf einen vorgewählten Wert zur Bewirkung des Schließens von genanntem Wasserstoffaustrittsmittel und einer anschließenden Erhöhung des Wasserstoffdruckes auf einen Wert, um das Öffnen von genanntem Wasserstoffaustrittsmittel zur Bereitstellung von Wasserstoff bei genanntem gewünschtem Mindestruck durch genanntes Austrittsmittel zu bewirken.

8. Eletrolyseur nach Anspruch 7, worin genanntes Sauerstoffdruckmittel ein Reglerventilmittel umfasst.

9. Elektrolyseur nach Anspruch 7, der ein Wasserstoffaustrittsschließmittel umfasst.

10. Elektrolyseur nach Anspruch 7 oder 8, worin genanntes Wasserstoffaustrittsschließmittel ein Mittel zur Detektion und Kontrolle des Flüssigkeitsspiegels zur Bereitstellung von genanntem Druckdifferenzial zwischen den Flüssigkeitsspiegeln bei genanntem vorgewähltem Wert zur Bewirkung von genanntem Schließen von genanntem Wasserstoffaustrittsmittel und genannter sich anschließender Erhöhung des Wasserstoffdruckes auf einen Wert umfasst, um das Öffnen von genanntem Wasserstoffaustrittsmittel zu bewirken.

11. Elektrolyseur nach Anspruch 10, worin genanntes Wasserstoffaustrittsschließmittel ein Mittel zur Detektion und Kontrolle des Anolyt-Spiegels zur Bereitstellung von genanntem Druckdifferenzial zwischen den Flüssigkeitsspiegeln bei genanntem vorgewähltem Wert zur Bewirkung von genanntem Schließen von genanntem Wasserstoffaustrittsmittel und genannter sich anschließender Erhöhung des Wasserstoffdruckes auf einen Wert umfasst, um das Öffnen von genanntem Wasserstoffaustrittsmittel zu bewirken.

12. Elektrolyseur nach Anspruch 9, worin genanntes Wasserstoffaustrittsschließmittel ein Abtastmittel für Katholyt-Flüssigkeit umfasst.

13. Elektrolyseur nach Anspruch 12, worin genanntes Wasserstoffaustrittsschließmittel ein Schwimmersperrmittel für Katholyt-Flüssigkeit umfasst.

14. Elektrolyseur nach Anspruch 12, worin genanntes Abtastmittel des Katholyt-Flüssigkeitsspiegels optische Sensoren umfasst, die in genanntem Katholyt oder unmittelbar angrenzend außerhalb von genanntem Katholyt angeordnet sind.

15. Elektrolyseur nach Anspruch 12, worin genanntes Abtastmittel des Katholyt-Flüssigkeitsspiegels ein Abtastmittel mit elektrischem Kontakt umfasst.

16. Elektrolyseur nach einem der Ansprüche 12-15, worin genanntes Wasserstoffaustrittsschließmittel ferner Ventilmittel zur Bewirkung von Schließen und Öffnen von genanntem Wasserstoffaustritt und Aktivierungsmittel in Kommunikation mit genanntem Abtastmittel und genanntem Ventilmittel umfasst.

17. Elektrolyseur nach Anspruch 10, worin genanntes Mittel zur Detektion und Kontrolle des Katholyt-Spiegels Folgendes umfasst: ein Abtastmittel für die Anolyt-Flüssigkeit;
Ventilmittel zur Bewirkung von Schließen und Öffnen von genanntem Wasserstoffaustritt und Aktivierungsmittel in Kommunikation mit genanntem Abtastmittel und genanntem Ventilmittel.

18. Elektrolyseur nach einem der Ansprüche 7 - 17, der ferner ein Sauerstoffaustrittsmittel umfasst.

## Revendications

1. Un procédé pour fournir de l'hydrogène à une pression minimum souhaitée à partir d'un électrolyseur, comprenant :
fourniture d'une solution d'anolyte ayant un niveau de liquide anolyte ;
fourniture d'une solution de catholyte ayant un niveau de liquide catholyte ;
génération d'oxygène à une pression d'oxygène au-dessus dudit anolyte ;
génération d'hydrogène à une pression d'hydrogène au-dessus dudit catholyte ;
envoi dudit hydrogène à travers des moyens de sortie d'hydrogène ;
le procédé comportant l'augmentation de la pression d'oxygène au-dessus de l'anolyte pour obtenir une pression différentielle des niveaux de liquides entre ledit niveau de catholyte et ledit niveau d'anolyte jusqu'à une valeur présélectionnée pour réaliser la fermeture desdits moyens de sortie d'hydrogène et une augmentation ultérieure de la pression d'hydrogène jusqu'à une valeur qui fera ouvrir lesdits moyens de sortie d'hydrogène pour fournir de l'hydrogène à ladite pression minimum souhaitée.

2. Un procédé selon la revendication 1 qui comprend l'empêchement de la libération d'oxygène hors de ladite cellule par des moyens régulateurs d'oxygène.

3. Un procédé selon la revendication 2 qui comprend l'augmentation de ladite pression d'oxygène jusqu'à une valeur de pression d'oxygène souhaitée.

4. Un procédé selon la revendication 1 comprenant l'envoi dudit hydrogène à ladite pression minimum souhaitée dans des moyens générateurs d'hydrure métallique.

5. Un procédé selon la revendication 1 comprenant l'envoi dudit hydrogène à ladite pression minimum souhaitée dans des moyens compresseurs pour comprimer ledit hydrogène jusqu'à une deuxième pression minimum souhaitée.

6. Un procédé selon l'une quelconque des revendications 1 à 5, qui comprend de plus l'extraction de l'oxygène hors dudit électrolyseur.

7. Un électrolyseur pour fournir de l'hydrogène à une pression minimum souhaitée, comprenant :
une solution d'anolyte ayant un niveau de liquide anolyte ;
une solution de catholyte ayant un niveau de liquide catholyte ;
des moyens de génération d'oxygène pour générer de l'oxygène à une pression d'oxygène au-dessus dudit anolyte ;
des moyens de génération d'hydrogène pour générer de l'hydrogène à une pression d'hydrogène au-dessus dudit catholyte ;
des moyens de sortie de l'hydrogène généré ;
le perfectionnement comprenant des moyens de fermeture de sortie d'hydrogène ; des moyens de pression d'oxygène pour augmenter la pression d'oxygène au-dessus de l'anolyte pour obtenir une pression différentielle de niveaux liquides entre ledit niveau liquide du catholyte et ledit niveau liquide de l'anolyte jusqu'à une valeur présélectionnée pour obtenir la fermeture desdits moyens de sortie d'hydrogène, et une augmentation ultérieure de la pression d'hydrogène jusqu'à une valeur permettant d'obtenir l'ouverture desdits moyens de sortie d'hydrogène pour fournir de l'hydrogène à ladite pression minimum souhaitée à travers lesdits moyens de sortie.

8. Un électrolyseur selon la revendication 7 dans lequel les moyens de pression d'oxygène comprennent un moyen formant une soupape régulatrice.

9. Un électrolyseur selon la revendication 7 comprenant des moyens de fermeture de sortie d'hydrogène.

10. Un électrolyseur selon la revendication 7 ou la revendication 8 dans lequel lesdits moyens de fermeture de sortie d'hydrogène comprennent des moyens de détection de niveaux de liquides et des moyens de contrôle pour obtenir ladite pression différentielle des niveaux de liquides à ladite valeur présélectionnée pour obtenir ladite fermeture desdits moyens de sortie d'hydrogène et ladite augmentation ultérieure de la pression d'hydrogène jusqu'à une valeur qui fait ouvrir lesdits moyens de sortie d'hydrogène.

11. Un électrolyseur selon la revendication 10 dans lequel lesdits moyens de fermeture de sortie d'hydrogène comprennent des moyens de détection de niveau d'anolyte et des moyens de contrôle pour obtenir ladite pression différentielle des niveaux de liquides à ladite valeur présélectionnée pour obtenir ladite fermeture desdits moyens de sortie d'hydrogène et ladite augmentation ultérieure de la pression d'hydrogène jusqu'à une valeur qui fait ouvrir lesdits moyens de sortie d'hydrogène.

12. Un électrolyseur selon la revendication 9 dans lequel lesdits moyens de fermeture de sortie d'hydrogène comprennent des moyens de captage de liquide catholyte.

13. Un électrolyseur selon la revendication 12 dans lequel lesdits moyens de fermeture de sortie d'hydrogène comprennent des moyens de blocage de la flottation de liquide catholyte.

14. Un électrolyseur selon la revendication 12, dans lequel lesdits moyens de captage de niveau de liquide catholyte comprennent des capteurs optiques disposés à l'intérieur ou adjacents à l'extérieur dudit catholyte.

15. Un électrolyseur selon la revendication 12, dans lequel lesdits moyens de captage du niveau de liquide catholyte comprennent des moyens de captage à contact électrique.

16. Un électrolyseur selon l'une quelconque des revendications 12 à 15, dans lequel lesdits moyens de fermeture de sortie d'hydrogène comprennent de plus des moyens formant soupape pour faire fermer et ouvrir ladite sortie d'hydrogène et des moyens d'activation qui communiquent avec lesdits moyens de captage et lesdits moyens formant soupape.

17. Un électrolyseur selon la revendication 10, dans lequel ladite détection de niveau de catholyte et les moyens de contrôle comprennent des moyens de captage du liquide anolyte ;
moyens formant soupape pour faire fermer et ouvrir ladite sortie d'hydrogène ; et
moyens d'activation qui communiquent avec lesdits moyens de captage et lesdits moyens formant soupape.

18. Un électrolyseur selon l'une quelconque des revendications 7 à 17, qui comprend de plus des moyens de sortie d'oxygène.
